# EUROPÄISCHE PATENTSCHRIFT

(11) **EP 3 392 033 B1**
(45) Veröffentlichungstag und Bekanntmachung des Hinweises auf die Patenterteilung: **31.07.2019**
(21) Anmeldenummer: 17167129.0
(22) Anmeldetag: 19.04.2017
(51) Int. Cl.: B32B 7/12, B32B 27/08, B32B 27/18, B32B 27/32, B32B 27/34, B32B 1/08, B32B 3/28, B60K 15/01

(54) **TANK-INNENROHRLEITUNG, INSBESONDERE IN KRAFTSTOFFTANKS VON KRAFTFAHRZEUGEN**
TANK INTERNAL PIPE LINE, IN PARTICULAR IN FUEL TANKS OF MOTOR VEHICLES
CONDUITE INTÉRIEURE DE RÉSERVOIR, EN PARTICULIER DANS UN RÉSERVOIR DE CARBURANT DE VÉHICULES AUTOMOBILES

(43) Veröffentlichungstag der Anmeldung: 24.10.2018
(73) Patentinhaber: TI Automotive (Fuldabrück) GmbH, 34277 Fuldabrück (DE)
(72) Erfinder: ZIMMER, Werner, 34212 Melsungen/Röhrenfurth (DE); FAHRENHOLZ, Frank, 34128 Kassel (DE); BAUMANN, Matthias, 47199 Duisburg (DE)
(74) Vertreter: Rohmann, Michael

(56) Entgegenhaltungen:
- CA-A1- 2 509 518
- DE-A1- 19 912 438
- US-A1- 2007 134 458
- US-A1- 2010 166 995

## Beschreibung

Die Erfindung betrifft eine Tank-Innenrohrleitung, insbesondere in Kraftstofftanks von Kraftfahrzeugen, wobei die Rohrleitung einen Fluidkanal und eine den Fluidkanal umgebende Rohrwandung aufweist. Zudem betrifft die Erfindung einen Tank mit zumindest einer solchen Tank-Innenrohrleitung im Innenraum des Tanks.

Die US 2010/166995 A1 betrifft eine mehrschichtige Rohrleitung, die als Kraftstoffleitung in Kraftfahrzeugen verwendet wird. Bespiel 4 der D1 offenbart eine Rohrleitung mit der Struktur: modifizierte PE//modifizierte PA9T (aromatisches Polyamid)//modifizierte PE.

Die DE 199 12 438 A1 betrifft einen Kraftstoffbehälter und einen Kraftstoffeinfüllstutzen für diesen Behälter. Der Kraftstoffbehälter bzw. der Einfüllstutzen soll dabei mehrlagig aufgebaut sein und zumindest eine Schicht aus einem sperrenden Harz, sowie eine zu dieser Schicht benachbarte Schicht aus einem Polyolefin aufweisen. Als sperrende Harzschicht kommt insbesondere eine Schicht aus Polyamiden, Copolyamiden oder statistischen Copolymeren von Ethylen und Vinylalkohol in Frage.

Tank-Innenrohrleitungen der eingangs genannten Art sowie Tank-Innenrohrleitungen in Kraftstofftanks von Fahrzeugen sind aus der Praxis bereits in verschiedenen Ausführungsformen bekannt. Dabei ist es auch bereits bekannt, diese Tank-Innenrohrleitungen mehrschichtig auszubilden. Die aus der Praxis bekannten Tank-Innenrohrleitungen weisen dabei allerdings oftmals den Nachteil auf, dass durch den Kontakt mit Fluiden, beispielsweise mit Kraftstoff, Komponenten aus den Wandungen der Tank-Innenrohrleitungen herausgewaschen werden. Dies kann einerseits durch das in der Rohrleitung strömende Fluid und andererseits durch das Fluid, das sich innerhalb des Tanks befindet und in Kontakt mit der Tank-Innenrohrleitung kommt, geschehen. Diese Auswaschungen beeinträchtigen die Funktionsweise des Kraftstoffsystems in nachteilhafter Art und Weise und können langfristig zu dessen Beschädigung bzw. zu dessen Versagen führen. Die aus der Praxis bekannten Tank-Innenrohrleitungen sind zudem häufig aufwendig aufgebaut und daher nur kostenintensiv herzustellen. Fernerhin lässt die Beständigkeit der bekannten Tank-Innenrohrleitungen gegenüber mechanischen und chemischen Beanspruchungen oftmals zu wünschen übrig. Insofern besteht Verbesserungsbedarf.

Der Erfindung liegt daher das technische Problem zugrunde, eine Tank-Innenrohrleitung der eingangs genannten Art anzugeben, bei der die vorstehend beschriebenen Nachteile effektiv und funktionssicher vermieden werden können, bei der insbesondere unerwünschte Auswaschungen aus den Rohrwandungen verhindert werden können und die zudem ausreichend beständig gegenüber mechanischen und chemischen Beanspruchungen ist. Fernerhin liegt der Erfindung das technische Problem zugrunde, einen Tank mit zumindest einer solchen Tank-Innenrohrleitung anzugeben.

Zur Lösung des technischen Problems lehrt die Erfindung eine Tank-Innenrohrleitung gemäß Anspruch 1.

Fluid meint im Rahmen der Erfindung insbesondere einen Kraftstoff, bevorzugt Otto- oder Dieselkraftstoff. Es liegt im Rahmen der Erfindung, dass der Kraftstoff Beimischungen bzw. Zusätze, beispielsweise Methanol und/oder Ethanol, enthält. Anstelle des Begriffes Tank-Innenrohrleitung wird im Folgenden zur Vereinfachung teilweise auch der Begriff Rohrleitung verwendet.

Gemäß einer bevorzugten Ausführungsform weist die Tank-Innenrohrleitung lediglich die drei Schichten Innenschicht, Zentralschicht und Außenschicht auf. Eine weitere empfohlene Ausführungsvariante ist dadurch gekennzeichnet, dass zwischen der Innenschicht und der Zentralschicht und/oder zwischen der Außenschicht und der Zentralschicht zumindest eine Haftvermittlerschicht angeordnet ist. Diese Haftvermittlerschicht verbessert die Haftung zwischen der Innenschicht und der Zentralschicht und/oder zwischen der Außenschicht und der Zentralschicht. Grundsätzlich liegt es auch im Rahmen der Erfindung, dass zwischen der Innenschicht und der Außenschicht zumindest eine Barriereschicht vorgesehen ist, welche Barriereschicht die Permeation einer oder mehrerer Komponenten eines die Tank-Innenrohrleitung durchströmenden Fluids durch die Rohrwandungen nach außen hin verhindert, also gleichsam eine Barriere- bzw. Sperrwirkung besitzt. Prinzipiell kann eine derartige Barriereschicht auch die Permeation einer oder mehrerer Komponenten eines die Rohrleitung umgebenden Fluids durch die Rohrwandungen nach innen hin verhindern.

Gemäß einer bevorzugten Ausgestaltung, der im Rahmen der Erfindung besondere Bedeutung zukommt, ist die Innenschicht elektrisch leitfähig ausgebildet. Dazu weist die Innenschicht empfohlenermaßen geeignete Leitfähigkeitszusätze, beispielsweise Ruß, auf. Es liegt auch im Rahmen der Erfindung, dass die Innenschicht weitere Zusätze wie Stabilisierungszusätze und dergleichen enthält.

Nach besonders empfohlener Ausführungsform ist die Innenschicht auf Basis von Polyethylen ausgebildet. Besonders bevorzugt ist die Innenschicht auf Basis von High-Density-Polyethylen (HDPE) ausgebildet. Es empfiehlt sich, dass zur Herstellung des High-Density-Polyethylens zumindest ein Ziegler-Typ-Katalysator oder zumindest ein Metallocen-Katalysator verwendet wird. Nach besonders empfohlener Ausführungsform der Erfindung besteht die Innenschicht aus zumindest 80 Gew.-%, vorzugsweise aus zumindest 85 Gew.-%, bevorzugt aus zumindest 90 Gew.-% zumindest eines Polyolefins, insbesondere Polyethylen, besonders bevorzugt HDPE. Besonders bewährt hat sich im Rahmen der Erfindung, dass die Innenschicht aus zumindest 95 Gew.-% und bevorzugt aus zumindest 97 Gew.-% zumindest eines Polyolefins, insbesondere Polyethylen, besonders bevorzugt HDPE besteht. Es liegt auch im Rahmen der Erfindung, dass Mischungen von Polyolefinen verwendet werden. Empfohlenermaßen beträgt die Schichtdicke der Innenschicht 0,01 bis 0,4 mm, vorzugsweise 0,03 bis 0,3 mm und besonders bevorzugt 0,05 bis 0,25 mm.

Eine sehr empfohlene Ausführungsform der Erfindung ist dadurch gekennzeichnet, dass die Innenschicht in direktem Kontakt zu einem im Fluidkanal geführten Fluid steht.

Gemäß einer besonders bevorzugten Ausführungsform ist die zumindest eine Zentralschicht auf Basis zumindest eines aliphatischen und/oder teilaromatischen Polyamids ausgebildet. Es empfiehlt sich, dass die zumindest eine Zentralschicht auf Basis zumindest eines Polyamids aus der Gruppe "Polyamid 6, Polyamid 6.6, Polyamid 12, Polyamid 612, Polyphthalamid" ausgebildet ist und bevorzugt auf Basis von Polyamid 6 ausgebildet ist. Empfohlenermaßen besteht die zumindest eine Zentralschicht aus zumindest 80 Gew.-%, vorzugsweise aus zumindest 85 Gew.-%, bevorzugt aus zumindest 90 Gew.-% zumindest eines Polyamids, bevorzugt Polyamid 6. Nach einer sehr bewährten Ausführungsform besteht die zumindest eine Zentralschicht aus zumindest 95 Gew.-%, vorzugsweise aus zumindest 97 Gew.-% zumindest eines Polyamids, bevorzugt Polyamid 6. Es liegt im Rahmen der Erfindung, dass Mischungen verschiedener Polyamide verwendet werden. Gemäß einer bevorzugten Ausführungsform ist die zumindest eine Zentralschicht auf Basis einer Mischung aus zumindest einem aliphatischen Polyamid und zumindest einem teilaromatischen Polyamid bzw. Polyphthalamid ausgebildet. Eine alternative Ausgestaltung der Erfindung ist dadurch gekennzeichnet, dass die zumindest eine Zentralschicht auf Basis zumindest eines Co-Polymers ausgebildet ist. Bevorzugt ist das zumindest eine Co-Polymer auf Basis zumindest eines aliphatischen Polyamides mit zumindest einem teilaromatischen Polyamid bzw. Polyphthalamid ausgebildet. Es empfiehlt sich, dass die Schichtdicke der zumindest einen Zentralschicht 0,01 bis 2,5 mm, vorzugsweise 0,03 bis 1,5 mm und besonders bevorzugt 0,05 bis 1,0 mm beträgt.

Eine sehr empfohlene Ausgestaltung, der im Rahmen der Erfindung besondere Bedeutung zukommt, ist dadurch gekennzeichnet, dass die Außenschicht auf Basis von Polyethylen ausgebildet ist. Besonders bevorzugt ist die Außenschicht auf Basis von High-Density-Polyethlyen (HDPE) ausgebildet. Es liegt im Rahmen der Erfindung, dass für die Herstellung des HDPE zumindest ein Ziegler-Typ-Katalysator oder zumindest ein Metallocen-Katalysator verwendet wird. Es empfiehlt sich, dass die Außenschicht aus zumindest 80 Gew.-%, vorzugsweise aus zumindest 85 Gew.-%, bevorzugt aus zumindest 90 Gew.-% zumindest eines Polyolefins, insbesondere Polyethylen, besonders bevorzugt HDPE besteht. Nach einer sehr bewährten Ausführungsform besteht die Außenschicht aus zumindest 95 Gew.-%, bevorzugt aus zumindest 97 Gew.-% zumindest eines Polyolefins, insbesondere Polyethylen, besonders bevorzugt HDPE. Prinzipiell liegt es auch im Rahmen der Erfindung, dass Mischungen verschiedener Polyolefine verwendet werden. Es empfiehlt sich, dass die Schichtdicke der Außenschicht 0,01 bis 0,4 mm, vorzugsweise 0,03 bis 0,3 mm und besonders bevorzugt 0,05 bis 0,25 mm beträgt.

Eine weitere Ausführungsvariante ist dadurch gekennzeichnet, dass die Außenschicht in direktem Kontakt zu einem im Tank befindlichen Fluid, insbesondere zu einem im Tank befindlichen Kraftstoff, steht.

Gemäß einer besonders bevorzugten Ausführungsform ist die Außenschicht elektrisch leitfähig ausgebildet. Dazu enthält die Außenschicht zweckmäßigerweise geeignete Leitfähigkeitszusätze, beispielsweise Ruß. Eine sehr empfohlene Ausführungsform, der im Rahmen der Erfindung besondere Bedeutung zukommt, ist dadurch gekennzeichnet, dass sowohl die Innenschicht als auch die Außenschicht elektrisch leitfähig ausgebildet sind. Fernerhin liegt es im Rahmen der Erfindung, dass die Zentralschicht, zweckmäßigerweise durch Zusatz geeigneter Leitfähigkeitszusätze, elektrisch leitfähig eingerichtet ist. Grundsätzlich können die Außenschicht und/oder die Zentralschicht auch weitere Zusätze wie beispielsweise stabilisierende Zusätze und dergleichen aufweisen. Eine Ausführungsvariante der erfindungsgemäßen Tank-Innenrohrleitung zeichnet sich dadurch aus, dass sämtliche Schichten der Rohrwandung - zweckmäßigerweise durch geeignete Zusätze - elektrisch leitfähig ausgebildet sind.

Gemäß einer empfohlenen Ausgestaltung der Erfindung enthält die Innenschicht keine Oligomere bzw. im Wesentlichen keine Oligomere - die Innenschicht ist also bevorzugt oligomerfrei bzw. im Wesentlichen oligomerfrei ausgebildet. Empfohlenermaßen enthält die Außenschicht keine Oligomere bzw. im Wesentlichen keine Oligomere. Die Außenschicht ist also vorzugsweise oligomerfrei bzw. im Wesentlichen oligomerfrei eingerichtet. Es empfiehlt sich, dass sowohl die Außen- als auch die Innenschicht keine Oligomere bzw. im Wesentlichen keine Oligomere enthält. Dabei liegt es auch im Rahmen der Erfindung, dass die Zentralschicht keine Oligomere enthält bzw. im Wesentlichen keine Oligomere enthält. Vorzugsweise sind sämtliche Schichten der Rohrwandung frei von Oligomeren bzw. im Wesentlichen frei von Oligomeren.

Eine bevorzugte Ausführungsvariante ist dadurch gekennzeichnet, dass die Innenschicht und die Außenschicht aus dem gleichen Material bestehen bzw. im Wesentlichen bestehen. Bevorzugt sind sowohl die Innenschicht als auch die Außenschicht auf Basis von Polyethylen, besonders bevorzugt auf Basis von High-Density-Polyethlyen, ausgebildet.

Eine empfohlene Ausführungsform der Erfindung zeichnet sich dadurch aus, dass die Innenschicht und/oder oder die Außenschicht und/oder die Zentralschicht eine größere Schichtdicke aufweisen, als die zumindest eine Haftvermittlerschicht. Bevorzugt weisen die Innenschicht und die Außenschicht die gleiche Schichtdicke auf bzw. im Wesentlichen die gleiche Schichtdicke auf.

Es liegt im Rahmen der Erfindung, dass die Innenschicht und/oder die Außenschicht eine geringere Schichtdicke aufweisen, als die zumindest eine Zentralschicht. Vorzugsweise ist die Zentralschicht als diejenige Schicht mit der größten Schichtdicke der Rohrwandung der Tank-Innenrohrleitung ausgebildet. Empfohlenermaßen beträgt die Gesamtdicke (d) der Rohrwandung 0,1 bis 3,0 mm, bevorzugt 0,2 bis 2,5 mm, besonders bevorzugt 0,3 bis 2,0 mm.

Es liegt im Rahmen der Erfindung, dass die Rohrleitung genau fünf Schichten aufweist und dass insbesondere zwischen der Innenschicht und der Außenschicht ein dreischichtiges Schichtaggregat aus der Zentralschicht und zwei die Zentralschicht umgebenden Haftvermittlerschichten angeordnet ist.

Empfohlenermaßen wird die Tank-Innenrohrleitung durch Koextrusion der Schichten hergestellt.

Gemäß einer sehr empfohlenen Ausführungsform der Erfindung ist die Rohrleitung an eine im Tank, insbesondere im Kraftstofftank des Kraftfahrzeuges, angeordnete Pumpe angeschlossen. Die Pumpe dient zur Förderung des im Tank befindlichen fluiden Mediums bzw. des im Kraftstofftank vorhandenen Kraftstoffes durch die Rohrleitung. Die erfindungsgemäße Tank-Innenrohrleitung kann aber auch zum Druckausgleich und/oder zum NiveauAusgleich zwischen verschiedenen Bereichen des Tanks bzw. Kraftstofftanks dienen. In jedem Fall ist die Tank-Innenrohrleitung im Inneren bzw. im Innenraum eines Tanks bzw. Kraftstofftanks angeordnet.

Gemäß sehr empfohlener Ausgestaltung, der im Rahmen der Erfindung besondere Bedeutung zukommt, ist die Tank-Innenrohrleitung zumindest bereichsweise, bevorzugt vollständig, als Wellrohr ausgebildet. Wellrohr meint im Rahmen der Erfindung, dass die Rohrleitung bzw. die Rohrwandung Wellenberge und Wellentäler aufweist, die über den Umfang der Rohrleitung umlaufen. Empfohlenermaßen haben diese Wellenberge und Wellentäler der Rohrleitung über zumindest einen Teil der Länge der Rohrleitung, bevorzugt über die gesamte Länge bzw. im Wesentlichen über die gesamte Länge der Rohrleitung gleiche bzw. im Wesentlichen gleiche Abstände voneinander.

Eine alternative Ausführungsvariante ist dadurch gekennzeichnet, dass die Rohrleitung bzw. die Außenoberfläche der Rohrleitung zumindest bereichsweise, vorzugsweise vollständig, glatt bzw. im Wesentlichen glatt ausgebildet ist.

Gegenstand der Erfindung ist außerdem ein Tank, insbesondere ein Kraftstofftank für Kraftfahrzeuge, mit zumindest einer erfindungsgemäßen Tank-Innenrohrleitung im Innenraum des Tanks bzw. des Kraftstofftanks. Vorzugsweise ist dabei die Tank-Innenrohrleitung zumindest bereichsweise an einer Wandung des Tanks bzw. des Kraftstofftanks angeordnet. Es empfiehlt sich, dass die Tank-Innenrohrleitung zumindest bereichsweise an einer Wandung des Tanks fixiert ist. Grundsätzlich liegt es aber auch im Rahmen der Erfindung, dass die Tank-Innenrohrleitung in anderen Bereichen des Tank-Innenraums angeordnet ist bzw. durch andere Bereiche des Tanks bzw. des Kraftstofftanks verläuft.

Der Erfindung liegt die Erkenntnis zugrunde, dass sich die erfindungsgemäße Tank-Innenrohrleitung durch eine hohe Widerstandsfähigkeit gegenüber mechanischen und chemischen Einflüssen auszeichnet und dass insbesondere Auswaschungen aus den Wandungen der Tank-Innenrohrleitung nahezu gänzlich vermieden werden können. Dies gilt sowohl für Auswaschungen durch ein die Rohrleitung durchströmendes Fluid, insbesondere Kraftstoff, als auch für ein Fluid, das die Tank-Innenrohrleitung umgibt. Insbesondere wenn die Tank-Innenrohrleitung innerhalb eines Kraftstofftanks eines Kraftfahrzeuges angeordnet ist und in direktem Kontakt zu dem Kraftstoff steht, finden nahezu keinerlei Auswaschungen von Kunststoffkomponenten aus den Wandungen der Tank-Innenrohrleitung statt. Außerdem ist darauf hinzuweisen, dass die erfindungsgemäße Tank-Innenrohrleitung einfach und kostengünstig herstellbar ist. Von besonderem Vorteil ist bei der erfindungsgemäßen Tank-Innenrohrleitung weiterhin, dass sie für unterschiedliche Kraftstoffarten, beispielsweise für Ottokraftstoff oder Dieselkraftstoff, verwendbar ist, ohne dass die vorstehend beschriebenen vorteilhaften Eigenschaften beeinträchtigt würden. Zudem kann die erfindungsgemäße Tank-Innenrohrleitung in einem breiten Temperaturbereich von -40 bis 80 °C eingesetzt werden und zeichnet sich durch eine ausgezeichnete Temperaturbeständigkeit aus.

Nachfolgend wird die Erfindung anhand einer lediglich ein Ausführungsbeispiel darstellenden Zeichnung näher erläutert. Es zeigen in schematischer Darstellung:

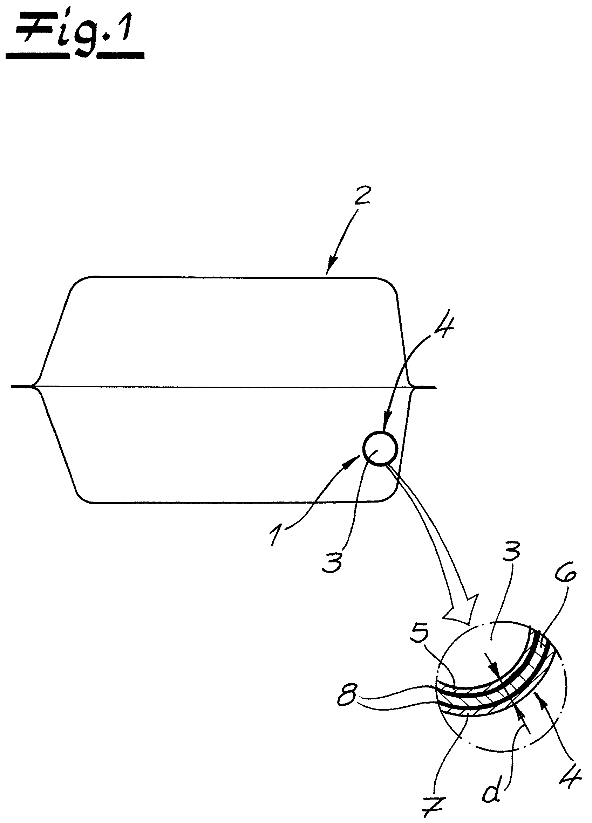

- Fig. 1: einen Schnitt durch einen Kraftstofftank eines Kraftfahrzeuges mit einer erfindungsgemäßen Tank-Innenrohrleitung und

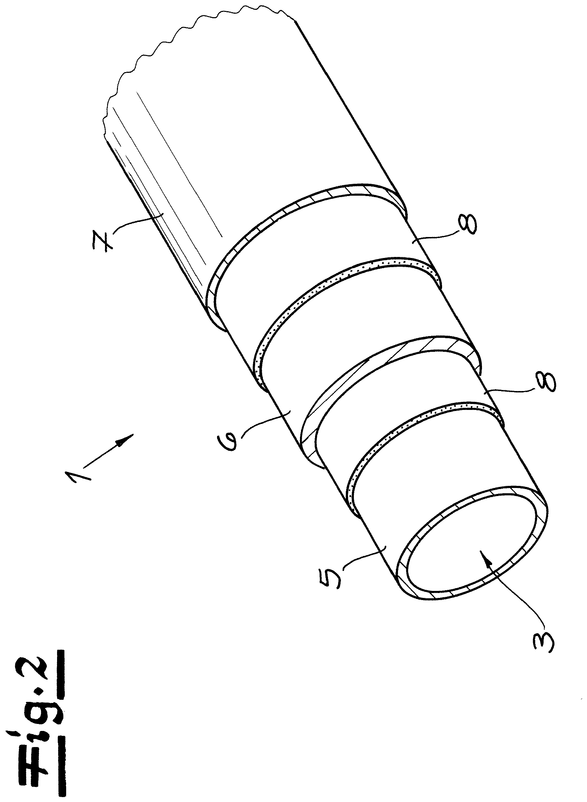

- Fig. 2: die erfindungsgemäße Tank-Innenrohrleitung in perspektivischer Ansicht.

Die Figuren zeigen eine erfindungsgemäße Tank-Innenrohrleitung 1, die bevorzugt und im Ausführungsbeispiel in einem Kraftstofftank 2 eines Kraftfahrzeuges angeordnet ist. In dem Kraftstofftank 2, in dem die erfindungsgemäße Tank-Innenrohrleitung 1 angeordnet ist, können prinzipiell unterschiedliche Kraftstoffarten wie Otto- oder Dieselkraftstoff vorhanden sein. Die Tank-Innenrohrleitung 1 weist einen Fluidkanal 3 und eine Rohrwandung 4 auf, welche den Fluidkanal 3 umgibt. Bevorzugt und im Ausführungsbeispiel weist die den Fluidkanal 3 umgebende Rohrwandung 4 fünf Schichten auf. Die Innenschicht 5 ist bevorzugt und im Ausführungsbeispiel auf Basis von High-Density-Polyethylen (HDPE) ausgebildet. Außerdem kann die Innenschicht 5 Zusätze, wie Leitfähigkeitszusätze, stabilisierende Zusätze oder dergleichen aufweisen. Zweckmäßigerweise und im Ausführungsbeispiel folgt auf die Innenschicht 5 eine Haftvermittlerschicht, die die Haftung zwischen der Innenschicht 5 und der darauf folgenden Schicht verbessert. Im Ausführungsbeispiel ist unmittelbar an die Haftvermittlerschicht 8 eine Zentralschicht angeschlossen, die bevorzugt auf Basis zumindest eines aliphatischen und/oder teilaromatischen Polyamids, besonders bevorzugt und im Ausführungsbeispiel auf Basis von Polyamid 6 ausgebildet ist. Zudem kann die Zentralschicht 6 Zusätze, wie Leitfähigkeitszusätze, stabilisierende Zusätze oder dergleichen aufweisen. Empfohlenermaßen und im Ausführungsbeispiel schließt an die Zentralschicht 6 unmittelbar eine Haftvermittlerschicht 8 an, die die Haftung zwischen der Zentralschicht 6 und der darauf folgenden Schicht verbessert. Auf diese Haftvermittlerschicht 8 folgt zweckmäßigerweise und im Ausführungsbeispiel die Außenschicht 7. Vorzugsweise und im Ausführungsbeispiel ist die Außenschicht 7 auf Basis von High-Density-Polyethylen (HDPE) ausgebildet. Zudem kann auch die Außenschicht 7 Zusätze wie Leitfähigkeitszusätze, Stabilisierungszusätze und dergleichen enthalten.

Bevorzugt und im Ausführungsbeispiel sind sowohl die Innenschicht 5 als auch die Zentralschicht 6 und die Außenschicht 7 elektrisch leitfähig ausgebildet. Dafür weisen die Schichten geeignete Leitfähigkeitszusätze, wie beispielsweise Ruß oder dergleichen, auf.

Zweckmäßigerweise und im Ausführungsbeispiel beträgt die Gesamtdicke (d) der Rohrwandung 0,2 bis 2,5 mm. Gemäß empfohlener Ausgestaltung und im Ausführungsbeispiel weisen die Innenschicht 5 und die Außenschicht 7 eine geringere Schichtdicke auf, als die Zentralschicht 6. Die Zentralschicht 6 ist im Ausführungsbeispiel also diejenige Schicht mit der größten Schichtdicke.

Nach bevorzugter Ausführungsform und im Ausführungsbeispiel enthalten alle Schichten der Tank-Innenrohrleitung 1 bzw. der Rohrwandung 4 keine Oligomere bzw. im Wesentlichen keine Oligomere. Die Tank-Innenrohrleitung ist vorzugsweise also gleichsam oligomerfrei bzw. im Wesentlichen oligomerfrei ausgebildet.

## Patentansprüche

1. Tank-Innenrohrleitung (1) in Kraftstofftanks (2) von Kraftfahrzeugen, wobei die Rohrleitung einen Fluidkanal (3) und eine den Fluidkanal (3) umgebende Rohrwandung (4) aufweist, wobei die Rohrwandung mehrschichtig ausgebildet ist und aus zumindest drei Schichten besteht, wobei eine Innenschicht (5) auf Basis von zumindest einem Polyolefin, vorzugsweise auf Basis von Polyethylen vorgesehen ist, wobei zumindest eine Zentralschicht (6) auf Basis zumindest eines aliphatischen und/oder teilaromatischen Polyamids vorhanden ist und wobei eine Außenschicht (7) auf Basis von zumindest einem Polyolefin, vorzugsweise auf Basis von Polyethylen vorgesehen ist,
wobei die Innenschicht (5) und/oder die Außenschicht (7) eine geringere Schichtdicke aufweisen als die zumindest eine Zentralschicht (6).

2. Tank-Innenrohrleitung nach Anspruch 1, wobei zwischen der Innenschicht (5) und der Zentralschicht (6) und/oder zwischen der Außenschicht (7) und der Zentralschicht (6) zumindest eine Haftvermittlerschicht (8) angeordnet ist.

3. Tank-Innenrohrleitung nach einem der Ansprüche 1 oder 2, wobei die Innenschicht (5) elektrisch leitfähig ausgebildet ist.

4. Tank-Innenrohrleitung nach einem der Ansprüche 1 bis 3, wobei die Innenschicht (5) auf Basis von High-Density-Polyethylen (HDPE) ausgebildet ist.

5. Tank-Innenrohrleitung nach einem der Ansprüche 1 bis 4, wobei die Schichtdicke der Innenschicht (5) 0,01 bis 0,4 mm, vorzugsweise 0,03 bis 0,3 mm beträgt und besonders bevorzugt 0,05 bis 0,25 mm beträgt.

6. Tank-Innenrohrleitung nach einem der Ansprüche 1 bis 5, wobei die Innenschicht (5) aus zumindest 80 Gew.-%, vorzugsweise aus zumindest 85 Gew.-%, bevorzugt aus zumindest 90 Gew.-% zumindest eines Polyolefins, insbesondere Polyethylen, besonders bevorzugt HDPE besteht.

7. Tank-Innenrohrleitung nach einem der Ansprüche 1 bis 6, wobei die Innenschicht (5) in direktem Kontakt zu einem im Fluidkanal (3) geführten Fluid steht.

8. Tank-Innenrohrleitung nach einem der Ansprüche 1 bis 7, wobei die zumindest eine Zentralschicht (6) auf Basis zumindest eines Polyamids aus der Gruppe "Polyamid 6, Polyamid 6.6, Polyamid 12, Polyamid 612, Polyphthalamid" ausgebildet ist und bevorzugt auf Basis von Polyamid 6 ausgebildet ist.

9. Tank-Innenrohrleitung nach einem der Ansprüche 1 bis 8, wobei die Schichtdicke der zumindest einen Zentralschicht (6) 0,01 bis 2,5 mm, vorzugsweise 0,03 bis 1,5 mm und besonders bevorzugt 0,05 bis 1,0 mm beträgt.

10. Tank-Innenrohrleitung nach einem der Ansprüche 1 bis 9, wobei die zumindest eine Zentralschicht (6) aus zumindest 80 Gew.-%, vorzugsweise aus zumindest 85 Gew.-%, bevorzugt aus zumindest 90 Gew.-% zumindest eines Polyamids, insbesondere Polyamid 6 besteht.

11. Tank-Innenrohrleitung nach einem der Ansprüche 1 bis 10, wobei die zumindest eine Zentralschicht (6) auf Basis einer Mischung aus zumindest einem aliphatischen Polyamid und zumindest einem teilaromatischen Polyamid bzw. Polyphthalamid ausgebildet ist.

12. Tank-Innenrohrleitung nach einem der Ansprüche 1 bis 10, wobei die zumindest eine Zentralschicht (6) auf Basis zumindest eines Co-Polymers ausgebildet ist, wobei das Co-Polymer vorzugsweise auf Basis zumindest eines aliphatischen Polyamides mit zumindest einem teilaromatischen Polyamid bzw. Polyphthalamid ausgebildet ist.

13. Tank-Innenrohrleitung nach einem der Ansprüche 1 bis 12, wobei die Außenschicht (7) auf Basis von High-Density-Polyethylen (HDPE) ausgebildet ist.

14. Tank-Innenrohrleitung nach einem der Ansprüche 1 bis 13, wobei die Schichtdicke der Außenschicht (7) 0,01 bis 0,4 mm, vorzugsweise 0,05 bis 0,3 mm und besonders bevorzugt 0,05 bis 0,25 mm beträgt.

15. Tank-Innenrohrleitung nach einem der Ansprüche 1 bis 14, wobei die Außenschicht (7) aus zumindest 80 Gew.-%, vorzugsweise aus zumindest 85 Gew.-%, bevorzugt aus zumindest 90 Gew.-% zumindest eines Polyolefins, insbesondere Polyethylen, besonders bevorzugt HDPE besteht.

16. Tank-Innenrohrleitung nach einem der Ansprüche 1 bis 15, wobei die Außenschicht (7) in direktem Kontakt zu einem im Tank befindlichen Fluid, insbesondere zu einem im Tank befindlichen Kraftstoff, steht.

17. Tank-Innenrohrleitung nach einem der Ansprüche 1 bis 16, wobei die Innenschicht (5) und/oder die Außenschicht (7) auf Basis einer Mischung von Polyolefinen ausgebildet ist.

18. Tank-Innenrohrleitung nach einem der Ansprüche 1 bis 17, wobei die Gesamtdicke (d) der Rohrwandung (4) 0,1 bis 3,0 mm, bevorzugt 0,2 bis 2,5 mm, besonders bevorzugt 0,3 bis 2,0 mm beträgt.

19. Tank-Innenrohrleitung nach einem der Ansprüche 1 bis 18, wobei die Rohrleitung (1) fünf Schichten aufweist und wobei vorzugsweise zwischen der Innenschicht (5) und der Außenschicht (7) ein Schichtaggregat aus der Zentralschicht (6) und zwei die Zentralschicht (6) umgebenden Haftvermittlerschichten (8) angeordnet ist.

20. Tank-Innenrohrleitung nach einem der Ansprüche 1 bis 19, wobei die Rohrleitung (1) zumindest bereichsweise in Form eines Wellrohrs ausgebildet ist.

21. Tank, insbesondere Kraftstofftank (2) für Kraftfahrzeuge, mit zumindest einer Tank-Innenrohrleitung nach einem der Ansprüche 1 bis 20 im Innenraum des Tanks.

## Claims

1. A tank interior pipe (1) in fuel tanks (2) of motor vehicles, wherein the pipe has a fluid channel (3) and a pipe wall (4) enveloping the fluid channel (3), wherein the pipe wall is multilayered in design and consists of at least three layers, wherein an inner layer (5) based on at least one polyolefin, preferably based on polyethylene, is provided, wherein at least one central layer (6) based on at least one aliphatic and/or partially aromatic polyamide is present, and wherein an outer layer (7) based on at least one polyolefin, preferably based on polyethylene, is provided,
wherein the inner layer (5) and/or outer layer (7) has a lower layer thickness than the at least one central layer (6).

2. The tank interior pipe according to claim 1, wherein at least one adhesion-promoting layer (8) is arranged between the inner layer (5) and central layer (6) and/or between the outer layer (7) and central layer (6) .

3. The tank interior pipe according to one of claims 1 or 2, wherein the inner layer (5) is electrically conductive in design.

4. The tank interior pipe according to one of claims 1 to 3, wherein the inner layer (5) is designed based upon high-density polyethylene (HDPE).

5. The tank interior pipe according to one of claims 1 to 4, wherein the layer thickness of the inner layer (5) measures 0.01 to 0.4 mm, preferably 0.03 to 0.3 mm, and especially preferably 0.05 to 0.25 mm.

6. The tank interior pipe according to one of claims 1 to 5, wherein the inner layer (5) consists of at least 80 %w/w, particularly of at least 85 %w/w, preferably of at least 90 %w/w of at least a polyolefin, in particular polyethylene, especially preferably HDPE.

7. The tank interior pipe according to one of claims 1 to 6, wherein the inner layer (5) is in direct contact with a fluid guided in the fluid channel (3).

8. The tank interior pipe according to one of claims 1 to 7, wherein the at least one central layer (6) is designed based upon at least one polyamide from the group "polyamide 6, polyamide 6.6, polyamide 12, polyamide 612, polyphthalamide", and preferably based upon polyamide 6.

9. The tank interior pipe according to one of claims 1 to 8, wherein the layer thickness of the at least one central layer (6) measures 0.01 to 2.5 mm, particularly 0.03 to 1.5 mm, and especially preferably 0.05 to 1.0 mm.

10. The tank interior pipe according to one of claims 1 to 9, wherein the at least one central layer (6) consists of at least 80 %w/w, particularly of at least 85 %w/w, preferably of at least 90 %w/w of at least a polyamide, in particular polyamide 6.

11. The tank interior pipe according to one of claims 1 to 10, wherein the at least one central layer (6) is designed based upon a mixture of at least one aliphatic polyamide and at least one partially aromatic polyamide or polyphthalamide.

12. The tank interior pipe according to one of claims 1 to 10, wherein the at least one central layer (6) is designed based upon at least one copolymer, wherein the copolymer is particularly designed based upon at least one aliphatic polyamide with at least one partially aromatic polyamide or polyphthalamide.

13. The tank interior pipe according to one of claims 1 to 12, wherein the outer layer (7) is designed based upon high-density polyethylene (HDPE).

14. The tank interior pipe according to one of claims 1 to 13, wherein the layer thickness of the outer layer (7) measures 0.01 to 0.4, particularly 0.05 to 0.3 mm, and especially preferably 0.05 to 0.25 mm.

15. The tank interior pipe according to one of claims 1 to 14, wherein the outer layer (7) consists of at least 80 %w/w, particularly of at least 85 %w/w, preferably of at least 90 %w/w of at least one polyolefin, in particular polyethylene, especially preferably HDPE.

16. The tank interior pipe according to one of claims 1 to 15, wherein the outer layer (7) is in direct contact with a fluid located in the tank, in particular with a fuel located in the tank.

17. The tank interior pipe according to one of claims 1 to 16, wherein the inner layer (5) and/or the outer layer (7) is designed based upon a mixture of polyolefins.

18. The tank interior pipe according to one of claims 1 to 17, wherein the overall thickness (d) of the pipe wall (4) measures 0.1 to 3.0 mm, preferably 0.2 to 2.5 mm, especially preferably 0.3 to 2.0 mm.

19. The tank interior pipe according to one of claims 1 to 18, wherein the pipe (1) has five layers, and wherein a layer aggregate comprised of the central layer (6) and two adhesion-promoting layers (8) enveloping the central layer (6) is particularly arranged between the inner layer (5) and outer layer (7).

20. The tank interior pipe according to one of claims 1 to 19, wherein the pipe (1) is at least regionally designed in the form of a corrugated pipe.

21. A tank, in particular a fuel tank (2), for motor vehicles, with at least one tank interior pipe according to one of claims 1 to 20 in the interior of the tank.

## Revendications

1. Conduite intérieure de réservoir (1) dans un réservoir de carburant (2) de véhicules automobiles, sachant que la conduite comporte un conduit de fluide (3) et un cloisonnement tubulaire (4) entourant le conduit de fluide (3), sachant que le cloisonnement tubulaire est constitué en plusieurs couches et est composé d'au moins trois couches, sachant qu'une couche intérieure (5) est prévue sur la base d'au moins une polyoléfine, de préférence sur la base de polyéthylène, sachant qu'au moins une couche centrale (6) est présente sur la base d'au moins un polyamide aliphatique et/ou aromatique et sachant qu'une couche extérieure (7) est prévue sur la base d'au moins une polyoléfine, de préférence sur la base de polyéthylène,
sachant que la couche intérieure (5) et/ou la couche extérieure (7) comportent une épaisseur de couche plus faible qu'au moins une couche centrale (6).

2. Conduite intérieure de réservoir selon la revendication 1, sachant qu'entre la couche intérieure (5) et la couche centrale (6) et/ou entre la couche extérieure (7) et la couche centrale (6) est disposée au moins une couche d'agent adhésif (8).

3. Conduite intérieure de réservoir selon l'une quelconque des revendications 1 ou 2, sachant que la couche intérieure (5) est constituée électro-conductrice.

4. Conduite intérieure de réservoir selon l'une quelconque des revendications 1 à 3, sachant que la couche intérieure (5) est constituée sur la base de polyéthylène haute densité (PEHD).

5. Conduite intérieure de réservoir selon l'une quelconque des revendications 1 à 4, sachant que l'épaisseur de couche de la couche intérieur (5) est de 0,01 à 0,4 mm, de préférence de 0,03 à 0,3 mm et en particulier de préférence de 0,05 à 0,25 mm.

6. Conduite intérieure de réservoir selon l'une quelconque des revendications 1 à 5, sachant que la couche intérieure (5) est composée d'au moins 80 %/poids, de préférence d'au moins 85 %/poids, de préférence d'au moins 90 %/poids d'au moins une polyoléfine, en particulier de polyéthylène, en particulier de préférence de PEHD.

7. Conduite intérieure de réservoir selon l'une quelconque des revendications 1 à 6, sachant que la couche intérieure (5) est en contact direct avec un fluide guidé dans le conduit de fluide (3).

8. Conduite intérieure de réservoir selon l'une quelconque des revendications 1 à 7, sachant qu'au moins une couche centrale (6) est constituée sur la base d'au moins un polyamide du groupe « Polyamide 6, Polyamide 6,6, Polyamide 12, Polyamide 612, Polyphthalamide » et est constituée de préférence sur la base de polyamide 6.

9. Conduite intérieure de réservoir selon l'une quelconque des revendications 1 à 8, sachant que l'épaisseur de couche d'au moins une couche centrale (6) est de 0,01 à 2,5 mm, de préférence de 0,03 à 1,5 mm et en particulier de préférence de 0,05 à 1,0 mm.

10. Conduite intérieure de réservoir selon l'une quelconque des revendications 1 à 9, sachant qu'au moins une couche centrale (6) est composée d'au moins 80 %/poids, de préférence d'au moins 85 %/poids, de préférence d'au moins 90 %/poids d'au moins un polyamide, en particulier de polyamide 6.

11. Conduite intérieure de réservoir selon l'une quelconque des revendications 1 à 10, sachant qu'au moins une couche centrale (6) est constituée sur la base d'un mélange d'au moins un polyamide aliphatique et d'au moins un polyamide ou polyphthalamide partiellement aromatique.

12. Conduite intérieure de réservoir selon l'une quelconque des revendications 1 à 10, sachant qu'au moins une couche centrale (6) est constituée sur la base d'au moins un copolymère, sachant que le copolymère est constitué de préférence sur la base d'au moins un polyamide aliphatique avec au moins un polyamide ou polyphthalamide partiellement aromatique.

13. Conduite intérieure de réservoir selon l'une quelconque des revendications 1 à 12, sachant que la couche extérieure (7) est constituée sur la base de polyéthylène haute densité (PEHD).

14. Conduite intérieure de réservoir selon l'une quelconque des revendications 1 à 13, sachant que l'épaisseur de couche de la couche extérieure (7) est de 0,01 à 0,4 mm, de préférence de 0,05 à 0,3 mm et en particulier de préférence de 0,05 à 0,25 mm.

15. Conduite intérieure de réservoir selon l'une quelconque des revendications 1 à 14, sachant que la couche extérieure (7) est composée d'au moins 80 %/poids, de préférence d'au moins 85 %/poids, de préférence d'au moins 90 %/poids d'au moins une polyoléfine, en particulier de polyéthylène, en particulier de préférence de PEHD.

16. Conduite intérieure de réservoir selon l'une quelconque des revendications 1 à 15, sachant que la couche extérieure (7) est en contact direct avec un fluide se trouvant dans le réservoir, en particulier avec un carburant se trouvant dans le réservoir.

17. Conduite intérieure de réservoir selon l'une quelconque des revendications 1 à 16, sachant que la couche intérieure (5) et/ou la couche extérieure (7) est constituée sur la base d'un mélange de polyoléfines.

18. Conduite intérieure de réservoir selon l'une quelconque des revendications 1 à 17, sachant que l'épaisseur totale (d) du cloisonnement tubulaire (4) est de 0,1 à 3,0 mm, de préférence de 0,2 à 2,5 mm, en particulier de préférence de 0,3 à 2,0 mm.

19. Conduite intérieure de réservoir selon l'une quelconque des revendications 1 à 18, sachant que la conduite (1) comporte cinq couches et sachant que de préférence un ensemble de couches composé de la couche centrale (6) et de deux couches d'agent adhésif (8) entourant la couche centrale (6) est disposé entre la couche intérieure (5) et la couche extérieure (7).

20. Conduite intérieure de réservoir selon l'une quelconque des revendications 1 à 19, sachant que la conduite (1) est constituée au moins par secteur sous la forme d'un tube ondulé.

21. Réservoir, en particulier réservoir de carburant (2) pour véhicules automobiles, avec au moins une conduite intérieure de réservoir selon l'une quelconque des revendications 1 à 20 dans l'espace intérieur du réservoir.
